Europäisches Patentamt

European Patent Office

Office européen des brevets

(11) Publication number: **0 215 974**
**B1**

# EUROPEAN PATENT SPECIFICATION

(45) Date of publication of the patent specification:
**05.12.90**

(51) Int. Cl.⁵: **A43B 13/20**, **B29C 49/04**, **B29C 49/18**

(21) Application number: **85112172.3**

(22) Date of filing: **25.09.85**

(54) Air-cushioned shoe sole components and method for their manufacture.

(43) Date of publication of application:
**01.04.87 Bulletin 87/14**

(45) Publication of the grant of the patent:
**05.12.90 Bulletin 90/49**

(84) Designated Contracting States:
**AT BE CH DE FR GB IT LI LU NL SE**

(56) References cited:
**FR-A- 1 164 720**
**FR-A- 1 190 358**
**FR-A- 2 052 268**
**FR-A- 2 185 106**
**GB-A- 1 067 222**
**GB-A- 2 085 797**

(73) Proprietor: **Huang, Ing-Chung, No. 15 Reh-Her 1st Street, Kaoshiung(TW)**

(72) Inventor: **Huang, Ing-Chung, No. 15 Reh-Her 1st Street, Kaoshiung(TW)**

(74) Representative: **Hoffmann, Klaus, Dr. rer. nat. et al, Hoffmann . Eitle & Partner Patentanwälte Postfach 81 04 20 Arabellastrasse 4, D-8000 München 81(DE)**

ACTORUM AG

## Description

This invention relates to shoe soles, methods of manufacturing shoe soles and shoes provided with such a sole.

Owing to the conditions under which they are used, sport shoes should provide a degree of impact resistance or buffer elasticity in order to protect the wearer from jars or shocks to his leg which may occur as a result of stumbling or falling awkwardly or which may occur as the natural course of events owing to the nature of the sport concerned.

Usually, the impact resistance or buffer elasticity of a sports shoe depends on the degree of softness of the material used for the sole. The weight of the shoe is also directly affected by that of the sole. Various attempts have been made to produce a light and elastic sports shoe and successive improvements in manufacturing technique for the production of such a shoe will be described in the following:

1. Initially light and elastic materials such as polyurethane was used to make soles for sport shoes. Owing to its constant density and fixed elasticity however this method cannot suitably meet the requirements of good impact resistance and antishock properties for wearers of different body weight and for use in different types of sport. In addition, with the use of a fixed density and elasticity, there is a danger that the wearer's ankle may be sprained or injured when his foot is placed down violently into contact with the ground owing to the large variety of leg and food movements employed by the various individuals when placing the heel against the ground.

2. In order to prevent the wearer's ankle from being sprained or injured when making contact with the ground, shoe manufacturers have attempted to provide a combination of two different materials with different densities (hardness) for soles. But since the location and hardness of the two different materials is fixed once the decision has been made, the density cannot be adjusted. Thus, in manufacture, a variety of soles with various elastic parts in different locations are manufactured to meet different individual requirements. Although such a sole may meet an individual requirement concerning placement of the foot on landing, it cannot be adjusted according to an individual's weight, according to the type of sport or according to the different requirements of elasticity. Therefore, it is still far away from a fully satisfactory solution.

3. In an attempt to meet this problem, an air cushion sole has been proposed which provides a pressurized buffer elasticity and therefore offers better shock absorption and comfort. Nevertheless, since such a sole is inflated to a constant pressure and cannot be inflated or deflated by the user it cannot meet the requirements of different individual's weight and different required buffer elasticity in various sports. It is thus incapable of meeting individual requirements. In addition, if the pressure should be reduced owing to an air-leak, the air cushion will flatten and lose practically all its supporting ability. The sole will thus reduce its height and become virtually useless.

4. In order to avoid the problem that the pressure in the sole cannot be adjusted, an air cushion is known provided with an air valve (FR-A 1 164 720). This air valve is the same as that used for bicycle tyres. The air cushion itself is manufactured by the conventionally used method of sealing two pieces of synthetic material together with application of heat. A volatile liquid is placed between the two pieces which evaporates to form a gas at room temperature thus inflating the cushion. But a single metallic air valve placed on the sole feels hard to the wearer while walking and also impairs comfort. In addition, such an air valve needs a bicycle pump to inflate the air cushion which is inconvenient for the user. Furthermore, since the air cushion is made of two pieces sealed together by heat, once it has been punctured by a sharp pointed implement and the air inside has leaked out, it flattens losing its original elasticity and support in the same manner as the prior art already mentioned. Its practical value and service life are both therefore limited.

The method of manufacturing this known air cushion is as follows. First, the raw material is made into a sheet and then the desired shape and size is cut out and two similar pieces are placed together facing each other and sealed together with the application of heat to form a flat bag into which is then introduced the liquid which evaporates at room temperature to inflate the bag. The bag is finally completely sealed. If it is desired to provide the air valve, the above mentioned cushion bag is normally provided with the valve which prevents excess pressure above 25 psi from being achieved thus preventing the cushion bag from bursting. The valve is set as close as possible to the outer edge whilst the cushion is enclosed by a wrapping layer. The valve may not be exposed to the exterior in order to avoid presenting a hinderance to walking or damage. Thus, the valve is hidden in the wrapping layer so hat the wearer feels its presence and is therefore uncomfortable during walking.

Of course, if no valve is provided, this known air cusion is filled with air or the volatile liquid and is therefore unable to change its properties easily.

One object of the present invention is to provide a shoe sole which can be inflated to any desired pressure in a simple manner without sacrificing comfort.

Another object of the invention is to provide a robust inflatable shoe sole, which can be manufactured by a simple method.

Another object of the invention is to provide an inflatable shoe sole which is not completely reliant on inflation for its buffer elasticity and shock absorbing properties.

According to one aspect of the invention, there is provided a member forming at least a part of a sole for a shoe, comprising:
top and bottom substantially parallel surfaces;
a plurality of pinch regions substantially lying in a plane parallel to said top and bottom surfaces;

a plurality of hollow chambers extending between the top and bottom surfaces and having side walls extending away from said pinch regions to provide the member with rigidity in a direction perpendicular to its top and bottom surfaces, the chambers being inter-connected to form at least one hollow envelope; and an opening to enable a fluid to be inserted into or extracted from the envelope for permitting inflation or deflation of the member when incorporated into a shoe.

According to another aspect of the invention there is provided a method of manufacturing the member of said one aspect comprising the steps of

a) blowing a tubular enclosure of synthetic plastics material;

b) pressing the enclosure between two mould parts shaped to impart substantially planar top and bottom surfaces to said envelope, each of which parts is provided with a plurality of projections having side surfaces generally perpendicular to the top and bottom surfaces, the two mould parts having said projections at corresponding locations to produce a plurality of pinch regions in the material of said enclosure; and

c) inflating the enclosure whilst between the mould parts to force it into contact with the interior walls of the mould, and to form supporting walls extending away from said pinch regions.

For a better understanding of the invention and to show how the same may be carried into effect, reference will now be made by way of example to the accompanying drawings in which;

Figure 1 is a cross-sectional view of one step in the manufacture of a shoe sole according to one embodiment of the present invention;

Figure 2 is a perspective view partially in section of part of a shoe sole manufactured in accordance with the method of Figure 1;

Figure 3 is a perspective view of second embodiment of part of a shoe sole which may be manfactured in accordance with the method illustrated in Figure 1;

Figure 4 shows a perspective view of a further embodiment according to the invention;

Figure 5 shows a complete shoe sole, partially in section in accordance with a further enbodiment of the invention;

Figure 6 shows components of the shoe sole partially in section according to a further embodiment of the invention;

Figure 7 is a partial sectional view along the lines 7-7 Figure 5;

Figure 8 is a partial sectional view in accordance with the section line 8-8 of Figure 6 but with the addition of valve members;

Figure 9 shows a step in the manufacture of a shoe sole according to a further embodiment of the invention;

Figure 10 shows a composite shoe sole manufactured in accordance with another method according to the invention;

Figure 11 shows a plan view of a further shoe sole in accordance with a further embodiment of the invention;

Figure 12 shows a lateral view partially in section along the line 12-12 of Figure 11;

Figure 13 shows one step in the manufacture of a shoe sole according to a further embodiment of the invention;

Figure 14 shows a whole shoe including a sole partially in section according to further emdodiment of the invention;

Figure 15 is a side view partially in section of a complete shoe including a sole according to a further embodiment of the invention;

Figure 16 shows part of a shoe sole comprising two separate chambers according to a further embodiment of the invention;

Figure 17 shows a sectional view along the line 17-17 of Figure 16;

Figure 18 shows a tube member for use in inflating the shoe sole according to the invention; and

Figure 19 shows a plan view of a shoe sole including the air tube of Figure 18.

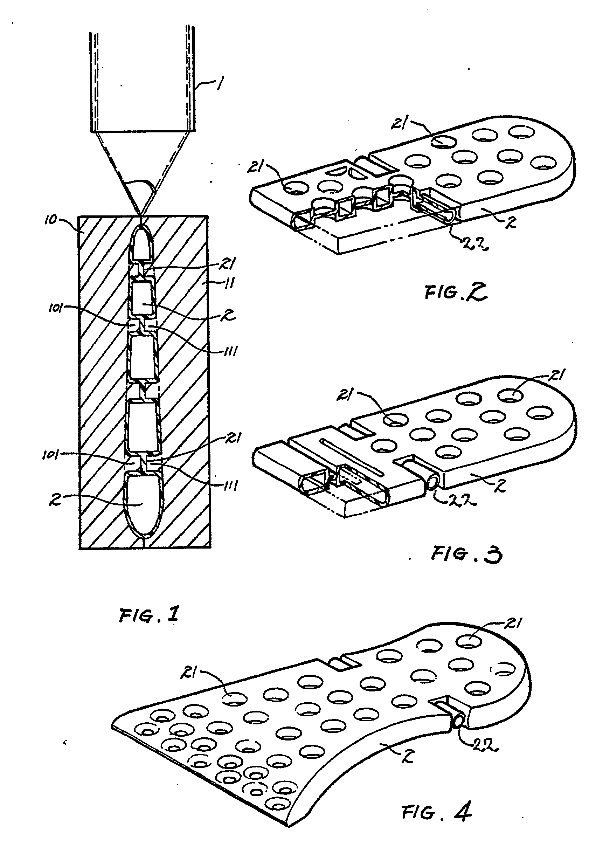

Referring now to Figure 1 of the accompanying drawings, there is illustrated an injection moulding machine 1 and first and second mould halves 10 and 11 between which an air cushion shoe sole 2 is being manufactured. Before the step illustrated in Figure 1 is reached, a substantially cylindrical tubular bag of polyurethane is blown from the injection moulding machine and this cylinder is then laterally compressed between the mould halves 10 and 11 which are gradually brought together to the position illustrated. Contained within each mould half, are provided a plurality of rod members, i.e. members 101 in mould half 10 and members 111 in mould half 11. The rods of one mould half are positioned to match exactly the positions of the rods in the other mould half. Thus, a plurality of pairs of short rods having a height slightly less than half of the height of the resulting air cushion are provided and face one another. When the mould halves are brought together, the polyurethane material is thus pinched between the mould halves at the positions of the rod pairs. Following this step, a sharp air needle is inserted through an air hole made in one of the mould halves and the air is pumped into the interior of the polyurethane bag. As a result, the bag is inflated under pressure and forced into interior contact with the mould halves so that it receives exactly the shape of these mould halves. In the vicinity of the rod pairs, the inflated polyurethane cushion 2 has a "cubical" shape, i.e. it has a plurality of vertical wall parts formed adjacent the rods 101, 111 so that a certain self-supporting function is possible even in the absence of inflation. Thus, as the short rods 101, 111 come into close proximity with one another to form squeeze or pinch points 21 when the mould halves 10, 11 are brought together, the material around these points 21 can help support the air cushion 2 itself with buffer elasticity to allow continuous use of the air cushion even when it is not inflated or if the air cushion 2 becomes punctured or torn by a sharp-pointed implement. It has proved that an air cushion 2 manufactured in this manner is able to withstand a pressure up to 40 psi.

Figures 2 to 4 show various embodiments of portions of a shoe sole which may be manufactured with the apparatus of Figure 1. The Figures also show air valves 22 on the two sides of the air cushion. These air valves are preferably of the type used in rubber balls and thus enable the shoe sole to be inflated by means of a normal ball needle or a simple air pump thus increasing the pressure within the air cushion 2 for improved buffer elasticity. These valves will be described in more detail hereinafter. The cushion sole may thus be inflated with gas or liquid (e.g. water) for weight adjustment.

Although the valves 22 are preferably provided, they are not essential if the desired final pressure is achieved in the manufacturing process by inflation between the mould halves.

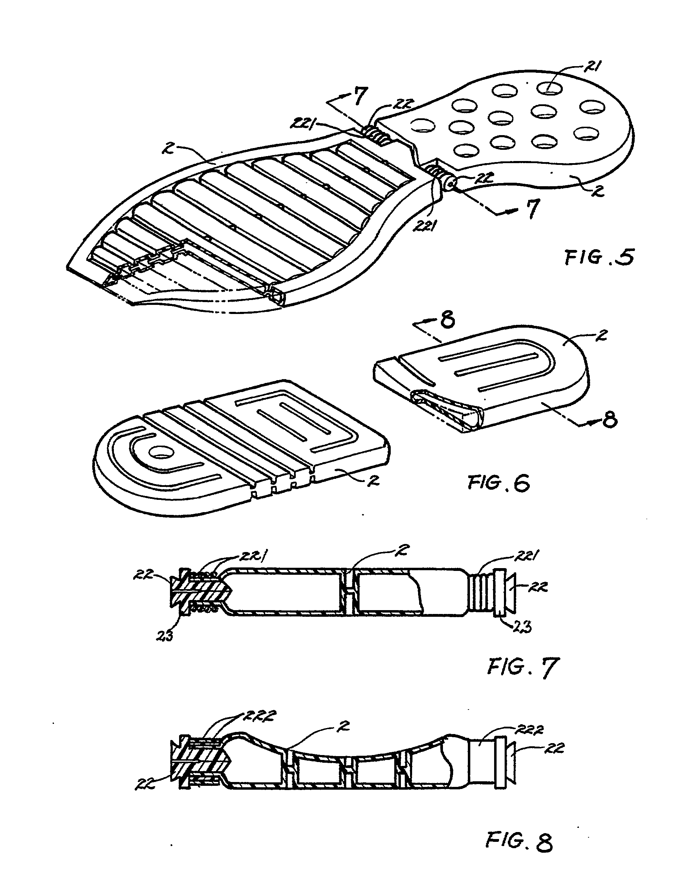

Figure 5 illustrates an embodiment in which two sole parts or air cushions are loosely joined together in the vicinity of the arch of the foot. Two tubular inflation members or valves 22 are provided also in the region of the arch, one member for each portion of the sole.

As will be further apparent from Figure 5, the rear portion of the sole is provided with the circular depression points 21 in accordance with the embodiments of Figures 2 to 4 which have been formed by means of the rod members 101, 111 as illustrated in Figure 1. However, the front portion of the sole in Figure 5 is configured differently. In place of a plurality of circular depressions, it is provided with a plurality of elongate depressions which nevertheless achieve the effect of a plurality of pinch points giving rise to vertical wall sections of the sole portion extending from the upper to the lower surface. Thus, both the front and rear portions of the sole of Figure 5 are able to provide a degree of self-supporting function so that the sole will support the wearer even when not inflated.

The front portion of the sole of Figure 5 may be manufactured by methods similar to that illustrated in Figure 1 but of course the rod like extensions 101, 111 will be replaced by elongate bar-like extensions.

Figure 6 illustrates a further possibility in which the front and rear portions of the sole are not attached together but will be simply built into a single sole and attaced together by the surrounding material. The configuration in Figure 6 is analogous to that illustrated in respect of the front portion of the sole in Figure 5.

Coming now to Figures 7 and 8, the construction of the inflation valves 22 may be seen in more detail. Each valve 22 includes a tube of an elastomer such as rubber and is therefore relatively soft. Towards the exterior end of each tube, a flange 23 is provided and the tube is inserted into a suitable aperture formed in the cusion sole up to the flange. In the embodiment of Figure 7, a plurality of anti-burst rings 221 are provided around the material of the cushion member where it abuts the tube. This ensures that the valve 22 will normally remain sealed but will open to avoid bursting of the cushion when sudden violent pressure increases occur within the cushion such as when the wearer lands on one foot from a height of several feet. Sealing of the tube is also effected by the provision of inclined surfaces on the interior end of the tube with the result that the interior pressure tends to force the tube to a closed condition.

As shown in Figure 8, in place of the rings 221 a tubular sleeve 222 may be employed with the same effect.

The tube valve members shown in Figures 7 and 8 may be employed in any of the embodiments illustrated in Figures 2 to 6. All the embodiments illustrated in these Figures may be manufactured by a method illustrated in Figure 1 by selecting a suitable pair of mould halves. The air cushion portion of the sole can be placed easily at any part of the foot and shaped by choice of an appropriate mould for practical requirements at any position such as at the front of the sole, the heel etc. In order to enhance the appearance of the resulting sole, a cloth layer made of natural or synthetic fibre may be adhered to the outer edge.

It is also possible to utilize the air cushion sole portions in combination with a further layer of rubber to form a multi-layer sole.

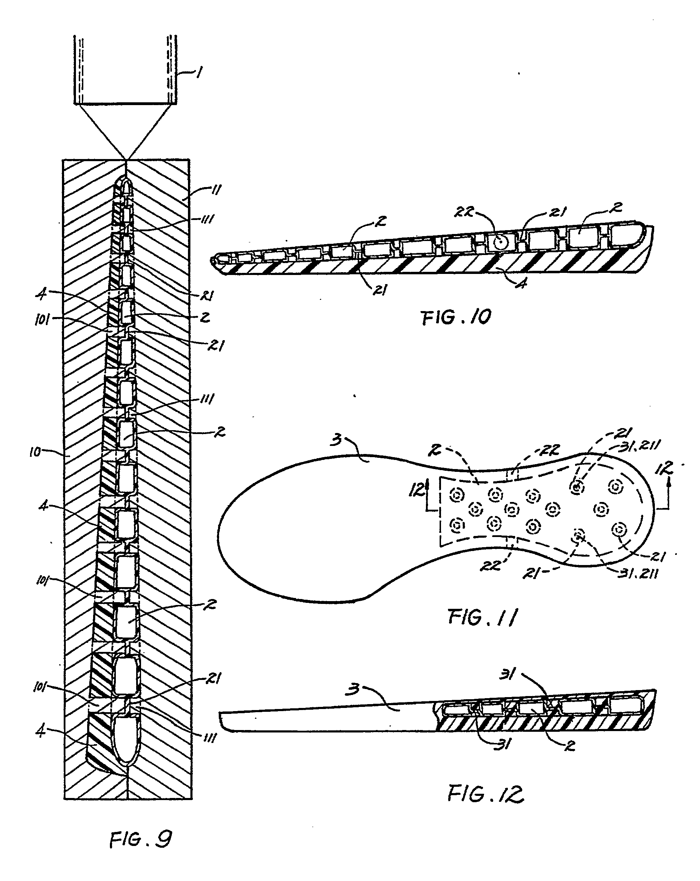

Figure 9 shows a first method of manufacturing such a multi-layer sole. The method is basically the same as that illustrated with respect to Figure 1, but with this difference: a rubber sole portion 4 is inlaid in the first mould half 10 before the two halves are pressed together and the cushion part is inflated. Adhesive is applied to the surface of the rubber part 4 to ensure a good bond. Thus, when the polyurethane film, is expanded within the mould by the injection of air, it adheres to the rubber sole thus forming a multi-layer composite sole in one step. Of course, in order to achieve the pinching effect of the rod members 101 in this method, the rods 101 in the mould half 10 must be of additional length in order to protrude through apertures provided in the rubber sole 4.

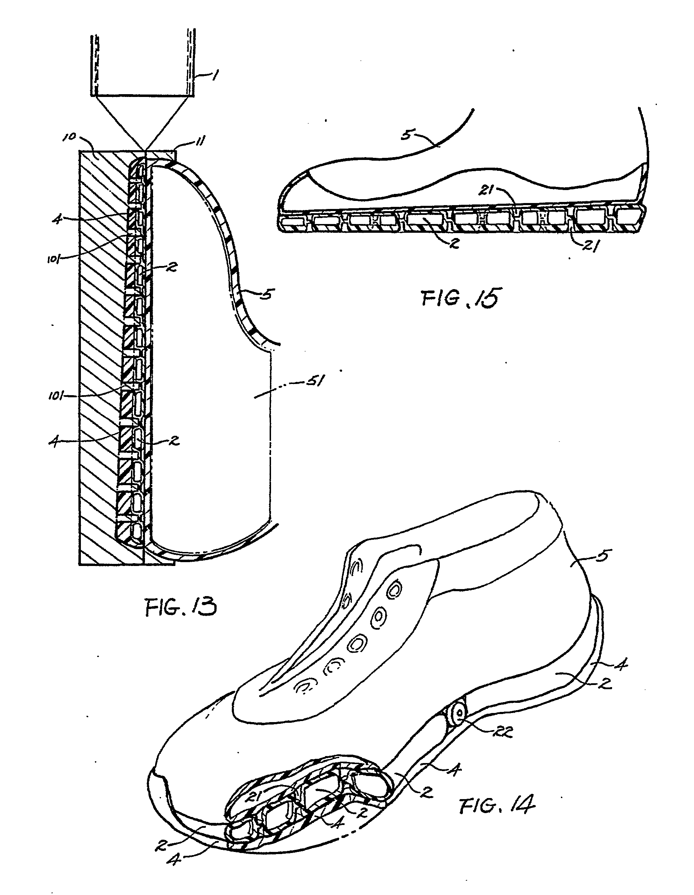

It is of course also possible to adhere the rubber sole 4 to the cushion member after the cushion member has been formed in the mould, as illustrated in Figure 10. In this case, a composite sole is achieved without the provision or necessity for any apertures in the rubber sole 4.

Another method of forming a composite sole is illustrated in Figures 11 and 12. After manufacture of the cushion member in accordance with the method of Figure 1, the air cushion 2 is placed within a polyurethane sole so that the air cushion 2 is hidden and remains invisible in the final sole.

Furthermore, in order to increase the self-supporting strength, a hole 211 may be cut in the center of each of the pinch points 21 so that the injection material of the polyurethane layer surrounding the air cushion 2 will penetrate through the air cushion thus forming vertical rods 31 connecting the upper and lower polyurethane layers and acting as an auxiliary support structure to strengthen the supporting power of the air cushion 2 up to 80 psi when the air cushion sole is inflated.

Figure 13 illustrates a third method according to which a rubber sole and the shoe upper is fixed together with the cushion sole in one operation. In this method, the right-hand mould half 11 is replaced by a shoe mould 51 surrounded by an upper 5. Thus, the mould half 10 provided with the rubber sole insert 4 is pressed against the shoe mould 51 with its upper 5. Short rods 101 of the mould half 10 penetrate the rubber sole 4 and have a length slightly less than that of the desired air cushion. Thus, the air cushion can be adhered and secured between the upper 5 and the sole 4 while the blow mould shaping is done thus forming a complete shoe with its upper 5, and air cushion 2 and the sole 4 all adhered together in one process.

Figures 14 and 15 show shoes manufactured in accordance with this method. Of course, such shoes can also be assembled from the various components by adhering the sole and the cushion member to the upper by manual processing.

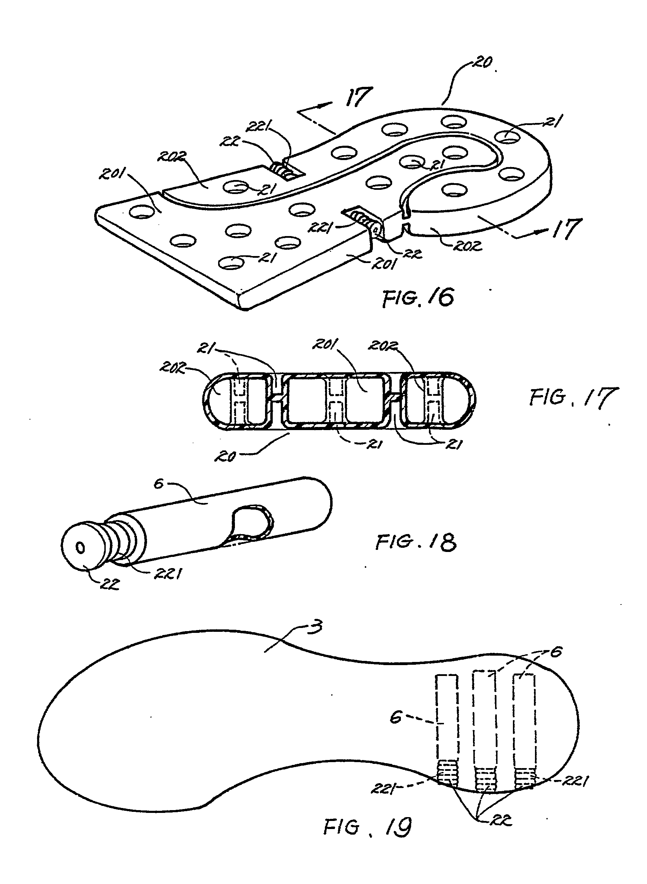

The air cushions 2 described up to this point have each had only a single chamber. It is also possible however to shape the mould halves 10 and 11 to manufacture an air cushion 20 having two chambers as shown in Figures 16 and 17. Each of the chambers 201, 202 is provided with a respective air valve 22 to enable adjustment of the pressure within each chamber independently. This may be useful in order to prevent the ankle of the wearer from being sprained or injured by turning at the instant of making contact with the ground of the inner edge or outer edge of the foot. The pressures within the two chambers can be adjusted according to the wearer's own particular requirements.

Of course, a single air cushion 2 may also be made to comprise a plurality of chambers. Moreover, by controlling the feeding of the injection moulding machine, the lower side of the air cushion 2 or 20 can be thickened such that no rubber sole 4 is needed and the air cushions 2 or 20 can directly contact the ground as shown in the embodiment of Figure 15.

The valve members 22 illustrated in Figures 7 and 8 may of course be employed in the embodiments of Figures 9 to 17 as well as those of Figures 1 to 6. The valves may be positioned in the region of the arch of the foot or on the shoe centre line in the heel portion facing to the rear.

Finally, as shown in Figures 18 and 19, individual tubes 6 as shown in Figure 18 may be manufactured and inserted into the sole as shown in Figure 19. Each tube 6 in this embodiment is effectively an extension of the valve member illustrated in Figures 7 and 8.

In conclusion, the air cushion made by the blow-mould shaping according to the invention not only has a high degree of self-support but also may be inflated with air or a liquid and makes it simple to interchange air and liquid. The pressure of the inflated air may range from 0 to 80 psi so that the wearer can adjust the pressure to that most suitable according to his weight and needs. The pressure adjustment may be easily carried out by means of a ball air needle or an air pump. Furthermore, by means of the method according to the invention, a variety of air cushions can be manufactured of different shape, design or outline. Even if the air cushion is not inflated, or is punctured by a sharp-pointed implement, it still possesses adequate supporting ability and buffer elasticity, thus increasing its practicality and service life. Furthermore, the anti-burst rings placed around the air valves can prevent the air cushion from bursting as a result of high pressure impact. As a result, air cushions made in accordance with the invention are superior to those previously known.

Thus, the invention provides the following series of advantages:

1. An easy and rapid method is provided for manufacturing a hollow "cubical" air cushion which is manufactured by blow-mould shaping in one step and maintains a desired supporting buffer elasticity instead of merely flattening down even when it is not inflated or if it is punctured thus enabling continuous use even if it is damaged.

2. In the process of blow-mould shaping, a rubber sole applied with adhesive can be placed within the mould so as to combine with the air cushion thus directly manufacturing a show sole together with an air cushion in one step.

3. The air cushion may also be placed within an injection mould for a polyurethane sole, thus forming the sole together with a hidden air cusion which is invisible from outside.

4. Similarly as under item 2 above, a rubber sole applied with adhesive as well as an upper applied with adhesive may be placed in the mould and respectively adhered to the cusion member. When blow-mould shaping is used, the process of manufacturing the whole shoe is thus simplified.

5. In one or both sides of tthe air cusion made by blow-mould shaping, normal rubber air valves as used in rubber balls or footballs are placed at a position convenient for inflation or deflation and an anti-burst ring is fixed over the air valve so that when the pressure in the air cusion becomes too high the extra pressure may be released thus preventing the air cusion from rupturing.

6. Such an air cusion made by blow-mould shaping has a structure which is able to meet practical requirements, thus possibly being inflated up to a pressure of 40 psi and to 80 psi for adjustment of buffer elasticity after insertion into the sole thus meeting the requirements of different body weights of sports.

7. The pressure may thus be adjusted easily by means of an air needle or an air pump according to the user's wishes.

8. The air cushion according to the invention may be inflated by air or any other liquid to change the shoe weight if necessary, and the operation for changing the contents can be carried out easily and conveniently.

9. A two-chamber air cushion may also be manufactured by blow-mould shaping and each chamber may be provided with its own air valve for inflation with differing air pressures. Thus, individual habits of foot contact (interior edge or exterior edge of the heel contacting first) may be met. In addition, the two-chamber cushion may be designed according to the turning theory at the very moment of contact with the ground while doing exercise, so that it can effectively prevent the ankle from being sprained or injured.

10. The air cushion sole according to the invention can be freely adjusted in buffer elasticity according to each individual's weight, desire and according to the type of sport involved.

## Claims

1. A member (2) forming at least a part of a sole for a shoe, comprising:
top and bottom substantially parallel surfaces;
a plurality of pinch regions (21) substantially lying in a plane parallel to said top and bottom surfaces;
a plurality of hollow chambers extending between the top and bottom surfaces and having side walls extending away from said pinch regions to provide the member with rigidity in a direction perpendicular to its top and bottom surfaces, the chambers being inter-connected to form at least one hollow envelope; and an opening to enable a fluid to be inserted into or extracted from the envelope for permitting inflation or deflation of the member when incorporated into a shoe.

2. A member according to claim 1 further comprising a valve (22) located in the opening.

3. A member according to claim 2 wherein the valve comprises a tube member provided with an anti-burst ring (221) or an anti-burst tube (222), the material defining said opening being inserted between said tube member and the anti-burst ring (221) or anti-burst tube (222).

4. A member according to any preceding claim comprising two hollow envelopes (201, 202) each having a separate opening.

5. A shoe comprising a sole according to any preceding claim.

6. A method of manufacturing a member according to any preceding claim comprising the steps of:
   a) blowing a tubular enclosure of synthetic plastics material;
   b) pressing the enclosure between two mould parts (10, 11) shaped to impart substantially planar top and bottom surfaces to said envelope, each of which parts is provided with a plurality of projections having side surfaces generally perpendicular to the top and bottom surfaces, the two mould parts having said projections at corresponding locations to produce a plurality of pinch regions in the material of said enclosure; and
   c) inflating the enclosure whilst between the mould parts to force it into contact with the interior walls of the mould, and to form supporting walls extending away from said pinch regions.

7. A method according to claim 6 wherein said projections are formed by a plurality of short rods (101, 111).

8. A method according to claim 6 or claim 7 in which an elastomeric insert is provided in one mould part, and is adhered to the plastics enclosure.

9. A method according to any one of claims 6 to 8 in which one mould part comprises a shoe mould with a surrounding upper.

10. A method according to any of claims 6 to 9 in which said synthetic plastics material is polyurethane.

11. A method according to any of claims 6 to 10 followed by the step of forming a shoe incorporating said enclosure in the sole thereof.

## Patentansprüche

1. Bauteil (2) zur Bildung wenigstens eines Teiles einer Sohle für einen Schuh mit:
oberen und unteren, im wesentlichen parallelen Flächen;
einer Mehrzahl von Klemmbereichen (21), die im wesentlichen in einer Ebene parallel zu den oberen und unteren Flächen liegen;
einer Mehrzahl von hohlen Kammern, die sich zwischen der oberen und unteren Fläche erstrecken und Seitenwände haben, die sich von den Klemmbereichen weg erstrecken, um dem Bauteil Festigkeit in einer Richtung senkrecht zu seiner oberen und unteren Fläche zu verleihen, wobei die Kammern miteinander verbunden sind, um eine hohle Hülle zu bilden; und
eine Öffnung, um ein Fluid in die Hülle einleiten bzw. aus dieser entnehmen zu können, um das Bauteil im in einen Schuh eingefügten Zustand aufblasen bzw. entleeren zu können.

2. Bauteil nach Anspruch 1, das ferner ein in einer Öffnung angeordnetes Absperrorgan (22) aufweist.

3. Bauteil nach Anspruch 2, bei dem das Absperrorgan ein Rohrteil aufweist, das mit einem Antiplatzring (221) oder einem Antiplatzrohr (222) versehen ist, wobei das die Öffnung bildende Material zwischen das Rohrteil und den Antiplatzring (221) oder das Antiplatzrohr (222) eingesetzt ist.

4. Bauteil nach einem der vorhergehenden Ansprüche, das zwei hohle Hüllen (201, 202) aufweist, die jeweils eine separate Öffnung aufweisen.

5. Schuh mit einer Sohle nach einem der vorhergehenden Ansprüche.

6. Verfahren zur Herstellung eines Bauteiles nach einem der vorhergehenden Ansprüche, das die folgenden Verfahrensschritte umfasst:
   a) Blasen einer rohrförmigen Hülle aus synthetischem Kunststoffmaterial;
   b) Pressen der Hülle zwischen zwei Formteilen (10, 11), die dazu ausgebildet sind, im wesentlichen ebene obere und untere Flächen an der Hülle auszubilden, wobei jedes der Formteile mit einer Mehrzahl von Vorsprüngen mit Seitenflächen versehen ist, die im wesentlichen senkrecht zur oberen und unteren Fläche angeordnet sind, wobei die beiden Formteile die Vorsprünge an entsprechenden Stellen aufweisen, um eine Mehrzahl von Klemmabschnitten im Material der Hülle auszubilden; und
   c) Aufblasen der Hülle, während sie zwischen den Formteilen angeordnet ist, um sie in Kontakt mit den Innenwänden der Form zu pressen, und um Tragwände auszubilden, die sich von den Klemmbereichen weg erstrecken.

7. Verfahren nach Anspruch 6, bei dem die Vorsprünge von einer Mehrzahl von kurzen Stäben (101, 111) gebildet sind.

8. Verfahren nach Anspruch 6 oder 7, bei welchem ein elastomeres Einsatzteil in einem Formteil angeordnet ist und an der Kunststoffhülle angeheftet ist.

9. Verfahren nach einem der Ansprüche 6 bis 7, bei welchem ein Formteil eine Schuhform mit einem umgebenden Schaft aufweist.

10. Verfahren nach einem der Ansprüche 6 bis 9, bei welchem das synthetische Kunststoffmaterial Polyurethan ist.

11. Verfahren nach einem der Ansprüche 6 bis 10, dem der Schritt des Herstellens eines Schuhes folgt, in den die Hülle als seine Sohle eingebracht ist.

**Revendications**

1. Une armature 2, qui constitue au moins un composant d'une semelle de chaussure et qui comporte : des surfaces supérieure et inférieure sensiblement parallèles ; un ensemble de zones de pincement s'étendant sensiblement dans un plan parallèle auxdites surfaces supérieure et inférieure ; un ensemble de chambres creuses réparties entre les surfaces supérieure et inférieure, ayant des parois latérales s'éloignant des zones de pincement pour conférer à l'armature une certaine rigidité dans une direction perpendiculaire aux surfaces supérieure et inférieure, les chambres étant reliées entre elles pour former au moins une enveloppe creuse ; et une ouverture permettant d'introduire un fluide dans l'enceinte ou de l'en extraire, pour permettre le gonflage ou le dégonflage de l'armature quand elle est introduite dans une chaussure.

2. Une armature selon la revendication 1 comportant en outre une valve 22 placée dans une ouverture.

3. Une armature selon la revendication 2, à l'intérieur de laquelle la valve comporte une pièce tubulaire équipée de bagues anti-éclatement 221 ou d'un tube anti-éclatement 222, le matériau définissant la dite ouverture étant introduit entre l'enceinte tubulaire et la bague 221 ou le tube 222 anti-éclatement.

4. Une armature selon l'une quelconque des revendications précédentes, comportant deux enveloppes creuses 201, 202, chacune d'elle étant munie de son ouverture séparée.

5. Une chaussure complètement équipée d'une semelle selon l'une quelconque des revendications précédentes.

6. Un procédé de fabrication d'une armature selon l'une quelconque des revendications précédentes comprenant les étapes de :
a) soufflage d'une enceinte tubulaire en matériau plastique synthétique ;
b) compression de l'enceinte entre les deux demi-coquilles d'un moule dont la forme est de nature à rendre les surfaces supérieure et inférieure de ladite enveloppe sensiblement plates, chacune de ces coquilles étant munie d'aspérités ayant des surfaces latérales généralement perpendiculaires aux surfaces supérieure et inférieure, à des endroits placés vis-à-vis les uns des autres, pour créer des zones de pincement dans le matériau de ladite enceinte ; et de
c) gonflage de l'enceinte pendant qu'elle se trouve encore prise entre les deux parties du moule pour la mettre au contact des parois intérieures du moule, et pour former des parois supportant les cloisons au fur et à mesure qu'elles s'éloignent des zones de pincement.

7. Un procédé selon la revendication 6, selon lequel lesdites excroissances sont formées par un ensemble de tiges courtes 101, 111.

8. Un procédé selon la revendication 6 ou la revendication 7 dans lequel un appendice en élastomère est placé dans l'une des demi-coquilles du moule et collé contre l'enceinte plastique.

9. Un procédé selon l'une quelconque des revendications 6 à 8 dans lequel l'une des demi-coquilles du moule reçoit le moule de la chaussure entouré du corps de celle-ci.

10. Un procédé selon l'une quelconque des revendications 6 à 9 dans lequel la matière plastique synthétique est du polyuréthane.

11. Un procédé selon l'une quelconque des revendications 6 à 10, suivi d'une étape d'assemblage de la chaussure en incorporant ladite enceinte dans la semelle de celle-ci.

FIG. 1

FIG. 2

FIG. 3

FIG. 4

EP 0 215 974 B1

FIG .5

FIG .6

FIG . 7

FIG. 8

FIG . 9

FIG . 10

FIG . 11

FIG . 12

FIG. 13

FIG. 15

FIG. 14

FIG. 16

FIG. 17

FIG. 18

FIG. 19